(19) Europäisches Patentamt
European Patent Office
Office européen des brevets

(11) **EP 4 227 090 A1**

(12) **EUROPEAN PATENT APPLICATION**
published in accordance with Art. 153(4) EPC

(43) Date of publication:
**16.08.2023 Bulletin 2023/33**

(21) Application number: **21877558.3**

(22) Date of filing: **04.10.2021**

(51) International Patent Classification (IPC):
**B32B 27/36** (2006.01)    **B32B 15/09** (2006.01)
**B65D 65/40** (2006.01)    **C08L 67/02** (2006.01)

(52) Cooperative Patent Classification (CPC):
**B32B 15/09; B32B 27/36; B65D 65/40; C08L 67/02**

(86) International application number:
**PCT/JP2021/036622**

(87) International publication number:
**WO 2022/075259 (14.04.2022 Gazette 2022/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.10.2020 JP 2020169652**

(71) Applicant: TOYOBO CO., LTD.
**Osaka-shi
Osaka 5300001 (JP)**

(72) Inventors:
• **TAMARI Noboru**
  **Inuyama-shi, Aichi 484-8508 (JP)**
• **HARUTA Masayuki**
  **Inuyama-shi, Aichi 484-8508 (JP)**

(74) Representative: **Vossius & Partner
Patentanwälte Rechtsanwälte mbB
Siebertstraße 3
81675 München (DE)**

(54) **BIAXIALLY ORIENTED POLYESTER FILM, AND LAMINATE**

(57)    Disclosed is a biaxially oriented polyester film that is excellent in adhesiveness with a metal layer etc. and excellent in deep drawability for an isotropic shape, such as a square shape. A biaxially oriented polyester film having at least a base layer and an adhesive layer each of which contains a polyester as a main component, the film satisfying the following requirements (1) to (3): (1) a difference between reversible heat capacity difference ($\Delta Cp$) at around glass transition temperatures of the adhesive layer and the base layer is not smaller than 0.10 and not larger than 0.45; (2) a molecular orientation ratio measured by using a molecular orientation meter is not lower than 1.0 and not higher than 1.2; and (3) a stress at 10% elongation (F10) in each of a machine and transverse direction is not lower than 90 MPa and not higher than 160 MPa.

[FIG. 1]

EP 4 227 090 A1

**Description**

TECHNICAL FIELD

The present invention relates to a polyester film, for molding, to be used in the field of packaging for pharmaceutical products, industrial products, and the like. More specifically, the present invention relates to a laminated polyester film characterized in that, when being laminated with a metal layer, the resultant laminated body has excellent moldability.

BACKGROUND ART

Polyethylene terephthalate (hereinafter, sometimes abbreviated as PET) has been used in a broad range of fields such as food packaging and industrial products since PET has excellent transparency, dimensional stability, mechanical properties, electrical properties, chemical resistance, and the like.

However, as compared to, for example, nylon films, PET is hard and brittle, and thus, is sometimes difficult to mold at the time of deep drawing.

Polybutylene terephthalate (hereinafter, sometimes abbreviated as PBT) has been conventionally used as an engineering plastic because PBT has not only excellent dynamic characteristics and impact resistance but also excellent gas barrier properties and chemical resistance. PBT has a high crystallization rate to have high productivity, and thus, has been used as a material that is useful as an engineering plastic. However, when used for, for example, a stretchable film, deterioration of the stretchability thereof, deterioration of the transparency thereof, and the like occur owing to crystallization.

Nylon films have been conventionally used for the purpose of molding by making use of excellent dynamic strengths and flexibilities thereof.

However, there have been problems that nylon films have lower heat resistances than, for example, PET films, and thus, physical properties at high temperature and high humidity decrease owing to thermal degradation, and moreover, dimension changes owing to moisture absorption. Accordingly, nylon films are generally laminated with PET films, for example.

Patent document 1 discloses a polyester film that can be suitably used for cold molding by having a difference of stresses at 5% elongation in four directions of the film and a difference of stresses at 15% elongation in the four directions of the film are 50 MPa or less and 70 MPa, respectively, and an elastic modulus in the range of 2.0 GPa to 3.5 GPa.

A crystalline polyester film tends to have a low moldability and become less likely to have a high lamination strength owing to high crystallinity thereof. Thus, it is anticipated that lamination of the crystalline polyester film with, for example, a metal layer leads to an insufficient adhesiveness therebetween. If the adhesiveness to the metal layer is low, stress generated through drawing is not dispersed during molding. Consequently, deep drawing cannot be performed. Therefore, it is highly probable that the crystalline polyester film is unfit for use in deep drawing.

In Patent document 2, it is disclosed that a polyester film characterized by a stress at 5% elongation (F5) and a stress at 10% (F10) in the machine direction and transverse direction of the film being $1.5 \geq F10/FS \geq 1.0$ and $F10 \geq 120$ MPa can be suitably used for the purpose of molding.

In order to solve the problem that the lamination strength of a crystalline polyester is low, an easily adhesive coat is provided on the polyester film to increase adhesiveness to a metal layer so that the moldability becomes favorable. However, there are concerns that, when the polyester film is made into a film roll, blocking due to the easily adhesive coat occurs and the transparency of the film roll deteriorates owing to a lubricant having been added to the easily adhesive coat in order to impart slipperiness.

RELATED ART DOCUMENT

PATENT DOCUMENT

Patent document 1: JP 6177475 B
Patent document 2: JP 5891792 B

## SUMMARY OF THE INVENTION

### PROBLEMS TO BE SOLVED BY THE INVENTION

The present invention has been made in view of the problems of the conventional art. That is, an object of the present invention is to obtain a biaxially oriented polyester film that allows, after being laminated on a metal layer, the resultant laminated body to be suitably used to be subjected to deep drawing.

### MEANS FOR SOLVING THE PROBLEMS

The present inventors conducted thorough studies in order to achieve the object. As a result, the present inventors have found that a biaxially oriented polyester film that has excellent deep drawability for an isotropic shape such as a square shape can be obtained by providing an adhesive layer and a base layer for a base material film; and setting a difference between reversible heat capacity differences ($\Delta$Cp) at around glass transition temperatures of the adhesive layer and the base layer, a stress at 10% elongation (F10) in each of a machine direction and a transverse direction, and a molecular orientation ratio to fall within a predetermined range.
The present invention includes the following configurations.

[1] A biaxially oriented polyester film comprising at least a base layer and an adhesive layer each of which contains a polyester as a main component, wherein
the biaxially oriented polyester film satisfies the following requirements (1) to (3):

(1) a difference between reversible heat capacity differences ($\Delta$Cp) at around glass transition temperatures of the adhesive layer and the base layer is not smaller than 0.10 and not larger than 0.45;
(2) the biaxially oriented polyester film has a molecular orientation ratio measured by using a molecular orientation meter, the molecular orientation ratio being not lower than 1.0 and not higher than 1.2; and
(3) the biaxially oriented polyester film has a stress at 10% elongation (F10) in each of a machine direction and a transverse direction, the stress at 10% elongation (F10) being not lower than 90 MPa and not higher than 160 MPa.

[2] The biaxially oriented polyester film according to [1], wherein the base layer contains polyethylene terephthalate in an amount of not lower than 60% by mass with respect to 100% by mass of a resin composition forming the base layer.
[3] The biaxially oriented polyester film according to [2], wherein the base layer contains polyethylene terephthalate in an amount of not lower than 60% by mass and not higher than 90% by mass with respect to 100% by mass of the resin composition forming the base layer and contains polybutylene terephthalate in an amount of not lower than 10% by mass and not higher than 40% by mass with respect to 100% by mass of the resin composition forming the base layer.
[4] The biaxially oriented polyester film according to any one of [1] to [3], wherein

the adhesive layer contains a polyethylene terephthalate resin obtained by copolymerization,
an ethylene terephthalate unit content with respect to the polyester contained in the adhesive layer is not lower than 75% by mole and not higher than 95% by mole, and
a copolymerization component content with respect to the polyester contained in the adhesive layer is not lower than 5% by mole and not higher than 25% by mole.

[5] A laminated body, comprising the biaxially oriented polyester film according to any one of [1] to [4] and a metal layer laminated on the adhesive layer side of the biaxially oriented polyester film.
[6] The laminated body according to [5], wherein the metal layer is an aluminum layer having a thickness of not smaller than 15 $\mu$m and not larger than 80 $\mu$m.
[7] A packaging material in which the laminated body according to [6] is used.

### EFFECTS OF THE INVENTION

The present invention provides a biaxially oriented polyester film that is excellent in adhesiveness between layers of a laminated body including a metal layer and that is excellent in deep drawability for an isotropic shape, such as a square shape.

BRIEF DESCRIPTION OF THE DRAWINGS

FIG. 1 is a schematic diagram regarding measurement of a reversible heat capacity difference (ΔCp).
FIG. 2 is a schematic diagram of a stretching pattern, in a transverse direction, that is a logarithmic pattern.
FIG. 3 is a schematic diagram of a two-stage stretching pattern in the transverse direction.
FIG. 4 is a plan view of a mold used for evaluating the deep drawability of laminated bodies.
FIG. 5 is a cross-sectional view, at A-A', of the mold used for evaluating the deep drawability of laminated bodies.

DESCRIPTION OF EMBODIMENTS

A biaxially oriented polyester film of the present invention is a film including at least a base layer and an adhesive layer.

Hereinafter, the present invention will be described in detail.

[Base Layer]

The base layer of the biaxially oriented polyester film of the present invention contains a PET resin as a main component, and the PET resin content with respect to 100% by mass of a resin composition forming the base layer is not lower than 60% by mass, preferably 70% by mass, and more preferably 80% by mass. Setting of the PET resin content to be not lower than 60% by mass enables the obtained biaxially oriented polyester film to have an increased stress at 10% elongation (F10) in each of a machine direction and a transverse direction and leads to improvement in deep drawability. In addition, the biaxially oriented polyester film comes to have favorable transparency and gives, when printing is performed thereon, a clear view of the print, and thus can be suitably used. In addition, since the PET resin, which is comparatively inexpensive, is contained as a main component, cost can be reduced.

A polyester resin (B) other than the PET resin (A) can be contained in the base layer of the biaxially oriented polyester film of the present invention for the purpose of adjusting the dynamic characteristics and the stretchability thereof.

Examples of the polyester resin (B) other than the PET resin (A) include polyester resins such as PBT, polyethylene naphthalate (PEN), polybutylene naphthalate (PBN), and polypropylene terephthalate (PPT). Additional examples of the polyester resin (B) include: polyester resins obtained by copolymerizing dicarboxylic acids such as isophthalic acid, orthophthalic acid, naphthalenedicarboxylic acid, biphenyldicarboxylic acid, cyclohexane dicarboxylic acid, adipic acid, azelaic acid, and sebacic acid; and polyester resins obtained by copolymerizing diol components such as ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol.

Among these polyester resins (B), PBT has excellent dynamic characteristics, and addition of a small amount of PBT leads to favorable stretchability. In addition, PBT enables decrease in an upper yield stress in a stress-strain curve of the obtained biaxially oriented polyester film. The lower the upper yield stress the lower the degree of local stretching at the time of drawing, and as a result, deep drawing to a larger depth becomes available. In addition, PBT is highly compatible with the PET resin and has excellent transparency, and thus is preferable.

The polyester resin (B) other than the PET resin (A) does not have to be contained. However, containing of the polyester resin (B) in an amount of not lower than 10% by mass enables stretchability at the time of film production to be favorable. In addition, the containing also enables the moldability of the film to be favorable.

Regarding the upper limit of the content of the polyester resin (B) other than the PET resin (A), the polyester resin (B) content with respect to 100% by mass of the resin composition forming the base layer is not higher than 40% by mass, preferably not higher than 30% by mass, and more preferably not higher than 20% by mass. Setting of the polyester resin (B) content to be not higher than 40% by mass enables the obtained biaxially oriented polyester film to have an increased stress at 10% elongation (F 10) in each of the machine direction and the transverse direction and leads to improvement in deep drawability.

The lower limit of the intrinsic viscosity of the PET resin (A) is preferably 0.45 dl/g, more preferably 0.50 dl/g, and most preferably 0.55 dl/g. Setting of the intrinsic viscosity to be not lower than 0.45 dl/g enables the intrinsic viscosity of the obtained biaxially oriented polyester film to be kept high as well and enables the stress at 10% elongation (F10) in each of the machine direction and the transverse direction to be easily increased.

The upper limit of the intrinsic viscosity of the PET resin (A) is preferably 0.80 dl/g, more preferably 0.75 dl/g, and most preferably 0.70 dl/g. Setting of the intrinsic viscosity to be not higher than 0.80 dl/g enables inhibition of excessive increase in a stress at the time of film stretching so that favorable film producibility can be obtained.

The intrinsic viscosity of the polyester resin (B) other than the PET resin (A) is preferably an intrinsic viscosity that allows the melt viscosity of the PET resin (A) and the melt viscosity of the polyester resin (B) to be approximately equal to each other in an extruder.

[Adhesive Layer]

The adhesive layer of the biaxially oriented polyester film of the present invention is formed from a resin composition that contains a PET resin as a main component. Containing of the PET resin as a main component enables the adhesive layer to have an increased adhesiveness to the base layer and enables suppression of decrease, in the lamination strength, due to delamination between the adhesive layer and the base layer.

The adhesive layer of the biaxially oriented polyester film of the present invention preferably contains a polyester resin obtained by copolymerization, for the purpose of increasing the adhesiveness of the adhesive layer to a metal layer. Polyethylene terephthalate obtained by copolymerization is particularly preferable.

Examples of the polyester resin obtained by copolymerization include: polyester resins obtained by copolymerizing dicarboxylic acids such as isophthalic acid, orthophthalic acid, naphthalenedicarboxylic acid, biphenyldicarboxylic acid, cyclohexane dicarboxylic acid, adipic acid, azelaic acid, and sebacic acid; and/or polyester resins obtained by copolymerizing diol components such as diethylene glycol, ethylene glycol, 1,3-propylene glycol, 1,2-propylene glycol, neopentyl glycol, 1,5-pentanediol, 1,6-hexanediol, cyclohexanediol, polyethylene glycol, polytetramethylene glycol, and polycarbonate diol.

In the adhesive layer, the lower limit of a copolymerization component content of the polyester resin obtained by copolymerization with respect to the terephthalic acid unit or the ethylene glycol unit of the polyester contained in the adhesive layer is preferably 5 mol%, more preferably 8 mol%, and most preferably 11 mol%. Setting of the copolymerization component content to be not lower than 5 mol% enables the adhesive layer to have an increased reversible heat capacity difference ($\Delta Cp$), enables the obtained biaxially oriented polyester film to have an increased lamination strength, and enables the adhesiveness to a metal layer to be made sufficient.

In the adhesive layer, the upper limit of the copolymerization component content of the polyester resin obtained by copolymerization with respect to the terephthalic acid unit or the ethylene glycol unit of the polyester contained in the adhesive layer is preferably 25 mol%, more preferably 22 mol%, and most preferably 19 mol%. Setting of the copolymerization component content to be not higher than 25 mol% enables inhibition of excessive increase in the reversible heat capacity difference ($\Delta Cp$) of the adhesive layer, and consequently enables inhibition of blocking from occurring when the obtained biaxially oriented polyester film is made into a roll. In addition, the setting enables inhibition of decrease in the stress at 10% elongation (F10) in each of the machine direction and the transverse direction.

The biaxially oriented polyester film of the present invention may contain, in addition to the polyester resin compositions, conventionally known additives, e.g., a lubricant, a stabilizer, a colorant, an antioxidant, an antistatic agent, an ultraviolet absorber, and the like.

The lubricant can be contained in order to adjust the dynamic friction coefficient of the film. Examples of the lubricant include: inorganic fine particle-based lubricants, such as silica, calcium carbonate, and alumina; and moreover, organic-based lubricants. Among these lubricants, silica and calcium carbonate are preferable, and, from the viewpoint of achieving both transparency and slipperiness, porous silica is most preferable.

The lower limit of the lubricant content of the biaxially oriented polyester film of the present invention is preferably 100 ppm by mass, more preferably 300 ppm by mass, and most preferably 500 ppm by mass. Setting of the lubricant content to be not lower than 100 ppm by mass enables the slipperiness of the film to be made favorable.

The upper limit of the lubricant content of the biaxially oriented polyester film in the present invention is preferably 10000 ppm by mass, more preferably 6000 ppm by mass, and most preferably 2000 ppm by mass. Setting of the lubricant content to be not higher than 10000 ppm by mass enables the transparency of the film to be made favorable.

[Method for Producing Biaxially Oriented Polyester Film]

A method for obtaining the biaxially oriented polyester film of the present invention is not particularly limited, but a T-die method is preferable from the viewpoint of obtaining a sufficient stress at 10% elongation (F10) in each of the machine direction and the transverse direction. In an inflation method, owing to the production method therein, a stretch ratio is less likely to increase, whereby F10 may be less likely to increase.

First, raw material resins are melt-extruded by using extruders, to be extruded in the form of films from T-dies. The films are cast on a cooling roll so as to be cooled. Consequently, an unstretched sheet is obtained. In order to obtain an unstretched sheet containing at least the resin compositions that form the base layer and the adhesive layer, a co-extrusion method using a feed block, a multi-manifold, etc., is preferably selected. Instead of the co-extrusion method, a dry lamination method, an extrusion lamination method, or the like can also be selected. In the case of performing lamination through the co-extrusion method, the resin compositions for each layer are preferably selected so that the difference between melt viscosities thereof is small.

The upper limit of the temperature of the cooling roll is preferably 40°C, and the temperature is more preferably not higher than 20°C. When the temperature is not higher than 40°C, the degree of crystallinity at the time of cooling and solidifying the polyester resin compositions having been melted is prevented from excessively increasing. Consequently, stretching can be more easily performed, and decrease in the transparency due to crystallization can also be suppressed.

The lower limit of the temperature of the cooling roll is preferably 0°C. When the temperature is not lower than 0°C, the effect of suppressing crystallization at the time of cooling and solidifying the polyester resin compositions having been melted can be sufficiently exhibited. In addition, in the case of setting the temperature of the cooling roll to fall within the above range, it is preferable to reduce the humidity of the environment near the cooling roll to prevent condensation.

The thickness of the unstretched sheet is suitably in a range of not smaller than 15 $\mu$m and not larger than 2500 $\mu$m. The thickness is more preferably not larger than 600 $\mu$m and most preferably not larger than 400 $\mu$m.

Next, a stretching method will be described. The stretching method can be a simultaneous biaxial stretching method or a sequential biaxial stretching method.

The lower limit of a temperature for stretching in the machine direction (hereinafter, also referred to as MD direction) is preferably 90°C, more preferably 95°C, and particularly preferably 100°C. When the temperature is not lower than 90°C, break can be further suppressed.

The upper limit of the temperature for stretching in the MD direction is preferably 140°C, more preferably 135°C, and particularly preferably 130°C. When the temperature is not higher than 140°C, the stress at 10% elongation (F10) in the MD direction can be increased, whereby the deep drawability becomes favorable.

The lower limit of a stretch ratio in the MD direction is preferably 3.5 times, more preferably 3.6 times, and particularly preferably 3.7 times. When the stretch ratio is not lower than 3.5 times, the stress at 10% elongation (F10) in the MD direction can be increased, whereby deep drawability becomes favorable.

The upper limit of the stretch ratio in the MD direction is preferably 4.5 times, more preferably 4.4 times, and particularly preferably 4.3 times. When the stretch ratio is not higher than 4.5 times, the effect of improving the stress at 10% elongation (F10) in the MD direction is sufficiently obtained.

The lower limit of a temperature for stretching in the transverse direction (hereinafter, also referred to as TD direction) is preferably 100°C, more preferably 105°C, and particularly preferably 110°C. When the temperature is not lower than 100°C, break can be made less likely to occur.

The upper limit of the temperature for stretching in the TD direction is preferably 140°C, more preferably 135°C, and particularly preferably 130°C. When the temperature is not higher than 140°C, the stress at 10% elongation (F10) in the TD direction can be increased, whereby the deep drawability becomes favorable.

The lower limit of a stretch ratio in the TD direction is preferably 3.5 times, more preferably 3.6 times, and particularly preferably 3.7 times. When the stretch ratio is not lower than 3.5 times, the stress at 10% elongation (F10) in the TD direction can be increased, whereby deep drawability becomes favorable.

The upper limit of the stretch ratio in the TD direction is preferably 4.5 times, more preferably 4.4 times, and particularly preferably 4.3 times. When the stretch ratio is not higher than 4.5 times, the effect of improving the stress at 10% elongation (F10) in the TD direction is sufficiently obtained.

In the biaxially oriented polyester film of the present invention, an orientation in the MD direction and an orientation in the TD direction are preferably approximate to each other. When the orientations in the MD direction and the TD direction are approximate to each other, favorable deep drawability is obtained in a case where a shape resulting from drawing is an isotropic shape, such as a square shape.

Specifically, the stretch ratio in the MD direction (MD ratio) and the stretch ratio in the TD direction (TD ratio) preferably satisfy the following formula.

$$0.9 \leq \text{TD ratio/MD ratio} \leq 1.1$$

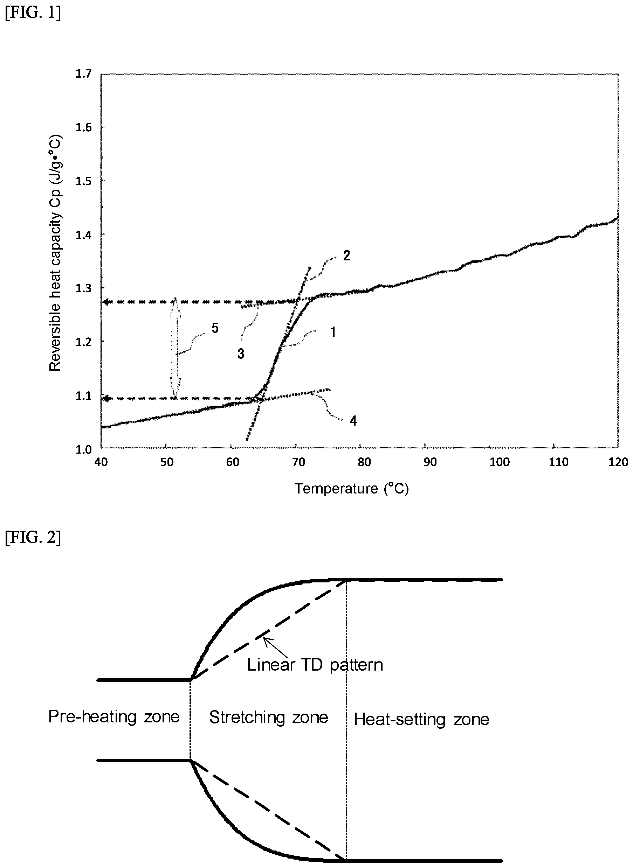

As another method, a method in which a stretching pattern in the TD direction is set to a logarithmic pattern is also preferable. Specifics of the method are as shown in FIG. 2. That is, while an ordinary stretching pattern in the TD direction is a linear pattern, the logarithmic pattern is a stretching pattern in which the biaxially oriented polyester film is sharply stretched in the first half of stretching and is mildly stretched in the second half of stretching. Use of such a stretching pattern makes it possible to, in the first half in which a stretching stress of the film is low, complete the majority of the stretching and suppress the orientation in the TD direction. As a result, the orientation in the MD direction and the orientation in the TD direction become approximate to each other, whereby deep drawability into, for example, an isotropic shape such as a square shape becomes favorable.

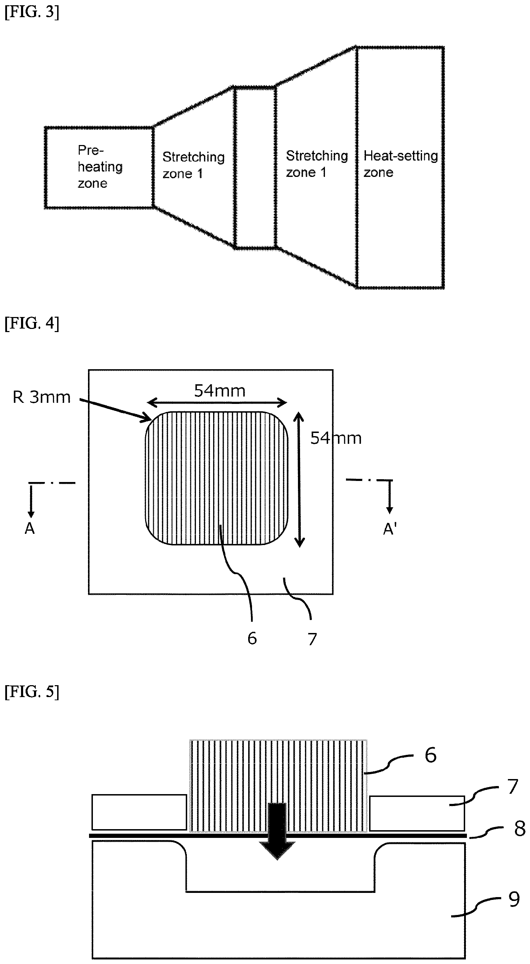

As still another method, a method in which the stretching pattern in the TD direction is set to a multi-stage pattern is also preferable. Specifics of the method are as shown in FIG. 3. If multi-stage stretching is performed, the stretching stress of the film in a step of stretching in the TD direction can be decreased, and the orientation in the TD direction can be suppressed. As a result, the orientation in the MD direction and the orientation in the TD direction become approximate to each other, whereby deep drawability into, for example, an isotropic shape such as a square shape becomes favorable.

In the multi-stage stretch, it is preferable to provide a pattern that allows a fixed length to be maintained after the end of each stage of stretching. In addition, it is preferable to obtain a temperature pattern in which the temperature is decreased from the first stage of stretching to the final stage of stretching such that a temperature difference of not lower than 2°C is generated in each stage of stretching. Regarding the lower limit of the number of stages of stretching, the number is preferably not smaller than 2. If the number of stages of stretching is not smaller than 2, the stretching stress can be decreased, and the orientation in the TD direction can be suppressed. Regarding the upper limit of the number of stages of stretching, the number is preferably not larger than 5. If the number of stages of stretching is not larger than 5, equipment can be prevented from being excessively upsized.

The lower limit of a heat-setting temperature is preferably 170°C, more preferably 175°C, and particularly preferably 180°C. When the heat-setting temperature is not lower than 170°C, a heat shrinkage rate can be more decreased.

The upper limit of the heat-setting temperature is preferably 210°C, more preferably 205°C, and particularly preferably 200°C. When the heat-setting temperature is not higher than 210°C, it is possible to suppress decrease, due to relaxation of molecular orientation, of the stress at 10% elongation (F10) in each of the machine direction and the transverse direction, whereby deep drawability becomes favorable. In addition, the adhesive layer can be inhibited from becoming brittle owing to heat treatment at high temperature, and as a result, the adhesiveness to a metal layer can be inhibited from decreasing.

The lower limit of a relaxation rate is preferably 0.5%, more preferably 1.0%, and particularly preferably 2.0%. When the relaxation rate is not lower than 0.5%, the heat shrinkage rate in the TD direction can be kept low.

The upper limit of the relaxation rate is preferably 10%, more preferably 8%, and particularly preferably 6%. When the relaxation rate is not higher than 10%, sagging or the like can be prevented from occurring, whereby flatness can be improved.

[Configuration and Characteristics of Biaxially Oriented Polyester Film]

The lower limit of the thickness of the biaxially oriented polyester film of the present invention is preferably 5 $\mu$m, more preferably 10 $\mu$m, and particularly preferably 15 $\mu$m. Setting of the thickness to be not smaller than 5 $\mu$m enables the strength of the film to be maintained, whereby deep drawability becomes favorable.

The upper limit of the thickness of the biaxially oriented polyester film in the present invention is preferably 50 $\mu$m, more preferably 40 $\mu$m, and particularly preferably 30 $\mu$m. Setting of the thickness to be not larger than 50 $\mu$m enables cold molding.

The lower limit of the thickness of the base layer of the biaxially oriented polyester film of the present invention is preferably 60%, more preferably 70%, and particularly preferably 80% of the thickness of the entire biaxially oriented polyester film. Setting of the thickness to be not lower than 60% enables increase in the stress at 10% elongation (F10) in each of the machine direction and the transverse direction, whereby deep drawability becomes favorable.

The upper limit of the thickness of the base layer of the biaxially oriented polyester film of the present invention is preferably 96%, more preferably 90%, and particularly preferably 86% of the thickness of the entire biaxially oriented polyester film. Setting of the thickness to be not higher than 96% enables obtainment of the effect of improving the adhesiveness of the adhesive layer to a metal layer, whereby deep drawability becomes favorable.

The lower limit of the thickness of the adhesive layer of the biaxially oriented polyester film of the present invention is preferably 4%, more preferably 8%, and particularly preferably 12% of the thickness of the entire biaxially oriented polyester film. Setting of the thickness to be not lower than 4% enables obtainment of the effect of improving the adhesiveness to a metal layer, whereby deep drawability becomes favorable.

The upper limit of the thickness of the adhesive layer of the biaxially oriented polyester film of the present invention is preferably 40%, more preferably 30%, and particularly preferably 20% of the thickness of the entire biaxially oriented polyester film. Setting of the thickness to be not higher than 40% enables increase in the stress at 10% elongation (F10) in each of the machine direction and the transverse direction, whereby deep drawability becomes favorable.

The upper limit of a reversible heat capacity difference ($\Delta$Cp) at around a glass transition temperature of the base layer of the biaxially oriented polyester film of the present invention is preferably 0.05, more preferably 0.03, and particularly preferably 0.01. Setting of the reversible heat capacity difference ($\Delta$Cp) to be not larger than 0.05 makes the base layer sufficiently rigid and enables increase in the stress at 10% elongation (F10) in each of the machine direction and the transverse direction.

The lower limit of a reversible heat capacity difference ($\Delta$Cp) at around a glass transition temperature of the adhesive layer of the biaxially oriented polyester film of the present invention is preferably 0.10, more preferably 0.15, and particularly preferably 0.20. Setting of the reversible heat capacity difference (ΔCp) to be not smaller than 0.10 enables obtainment of the effect of improving the adhesiveness to a metal layer, whereby deep drawability becomes favorable.

The upper limit of the reversible heat capacity difference (ΔCp) at around the glass transition temperature of the adhesive layer of the biaxially oriented polyester film of the present invention is preferably 0.45, more preferably 0.40, and particularly preferably 0.35. Setting of the reversible heat capacity difference (ΔCp) to be not larger than 0.45 enables inhibition of blocking from occurring when the biaxially oriented polyester film is made into a film roll.

The lower limit of the difference between the reversible heat capacity differences (ΔCp) at around the glass transition temperatures of the base layer and the adhesive layer of the biaxially oriented polyester film of the present invention is preferably 0.10, more preferably 0.15, and particularly preferably 0.20. Setting of the difference therebetween to be not smaller than 0.10 enables obtainment of the effect of improving the adhesiveness to a metal layer. Consequently, deep drawability becomes favorable, and moreover, the base layer becomes sufficiently rigid so that the stress at 10% elongation (F10) in each of the machine direction and the transverse direction can be increased.

The upper limit of the difference between the reversible heat capacity differences (ΔCp) at around the glass transition temperatures of the base layer and the adhesive layer of the biaxially oriented polyester film of the present invention is preferably 0.45, more preferably 0.40, and particularly preferably 0.35. Setting of the difference therebetween to be not larger than 0.35 enables inhibition of blocking from occurring when the biaxially oriented polyester film is made into a film roll.

The reversible heat capacity difference (ΔCp) at around the glass transition temperature of each layer of the biaxially oriented polyester film in the present invention corresponds to a mobile amorphous content obtained when a reversible heat capacity curve is measured by using a temperature-modulated differential scanning calorimeter. When a reversible heat capacity curve regarding a film sample is measured by using a temperature-modulated differential scanning calorimeter, a baseline of the reversible heat capacity curve is shifted at a temperature corresponding to a glass transition temperature, as in a measurement example shown in FIG. 1. The difference between a value before the shift and a value after the shift is referred to as the reversible heat capacity difference (ΔCp) and corresponds to a mobile amorphous content by which molecular chains can move at around the glass transition temperature in an amorphous region of the biaxially oriented polyester film.

The difference between the reversible heat capacity differences (ΔCp) at around the glass transition temperatures of the base layer and the adhesive layer of the biaxially oriented polyester film of the present invention indicates the difference between the mobile amorphous contents of the base layer and the adhesive layer.

The upper limit of the molecular orientation ratio of the biaxially oriented polyester film of the present invention is preferably 1.20, more preferably 1.17, and particularly preferably 1.14. The lower limit of the molecular orientation ratio is 1.0. Setting of the molecular orientation ratio to be not higher than 1.20 causes deep drawability into, for example, an isotropic shape such as a square shape to be favorable.

The lower limit of the stress at 10% elongation (F10) in the MD direction of the biaxially oriented polyester film of the present invention is preferably 90 MPa, more preferably 95 MPa, and particularly preferably 100 MPa. Setting of the stress at 10% elongation (F10) to be not lower than 90 MPa enables dispersion of the stress at the time of drawing, whereby deep drawability becomes favorable.

The upper limit of the stress at 10% elongation (F10) in the MD direction of the biaxially oriented polyester film of the present invention is preferably 160 MPa, more preferably 155 MPa, and particularly preferably 150 MPa. Setting of the stress at 10% elongation (F10) to be not higher than 160 MPa enables inhibition of troubles such as break during film production.

The lower limit of the stress at 10% elongation (F10) in the TD direction of the biaxially oriented polyester film of the present invention is preferably 90 MPa, more preferably 95 MPa, and particularly preferably 100 MPa. Setting of the stress at 10% elongation (F10) to be not lower than 90 MPa enables dispersion of the stress at the time of drawing, whereby deep drawability becomes favorable.

The upper limit of the stress at 10% elongation (F10) in the TD direction of the biaxially oriented polyester film of the present invention is preferably 160 MPa, more preferably 155 MPa, and particularly preferably 150 MPa. Setting of the stress at 10% elongation (F10) to be not higher than 160 MPa enables inhibition of troubles such as break during film production.

The upper limit of the haze of the biaxially oriented polyester film of the present invention is preferably 5.0%, more preferably 4.5%, and particularly preferably 4.0%. Setting of the haze to be not higher than 5.0% is preferable since a print can be clearly seen.

The lower limit of the dynamic friction coefficient of the biaxially oriented polyester film of the present invention is preferably 0.2, more preferably 0.25, and particularly preferably 0.30. Setting of the dynamic coefficient to be not smaller than 0.20 can result in increase in transparency, whereby the appearance becomes favorable.

The upper limit of the dynamic friction coefficient of the biaxially oriented polyester film of the present invention is preferably 0.55, more preferably 0.50, and particularly preferably 0.45. Setting of the dynamic coefficient to be not larger than 0.55 leads to favorable slipperiness of the film and enables inhibition of blocking.

The lower limit of the heat shrinkage rate in the MD direction of the biaxially oriented polyester film of the present invention is preferably 1.0%, more preferably 1.5%, and particularly preferably 2.0%. Setting of the heat shrinkage rate to be not lower than 1.0% can result in increase in the stress at 10% elongation (F10) in the machine direction, whereby deep drawability becomes favorable.

The upper limit of the heat shrinkage rate in the MD direction of the biaxially oriented polyester film of the present invention is preferably 6.0%, more preferably 5.5%, and particularly preferably 5.0%. Setting of the heat shrinkage rate to be not higher than 6.0% enables decrease in troubles regarding machining due to shrinkage of the film in a step such as a printing step.

The lower limit of the heat shrinkage rate in the TD direction of the biaxially oriented polyester film of the present invention is preferably -1.0%, more preferably -0.5%, and particularly preferably 0%. Setting of the heat shrinkage rate to be not lower than -1.0% can result in increase in the stress at 10% elongation (F10) in the transverse direction, whereby deep drawability becomes favorable.

The upper limit of the heat shrinkage rate in the TD direction of the biaxially oriented polyester film of the present invention is preferably 5.0%, more preferably 4.5%, and particularly preferably 4.0%. Setting of the heat shrinkage rate to be not higher than 5.0% enables decrease in troubles regarding machining due to shrinkage of the film in a step such as a printing step.

The biaxially oriented polyester film of the present invention may be subjected to corona discharge treatment, glow discharge treatment, flame treatment, or surface roughening treatment or may be subjected to known anchor coating, printing, decoration, or the like, as long as the object of the present invention is not impaired by doing so.

A print layer may be laminated on the biaxially oriented polyester film of the present invention. As a print ink for forming the print layer, an aqueous and solvent-based resin-containing print ink can be preferably used. Here, examples of the resin used for the print ink include acrylic-based resins, urethane-based resins, polyester-based resins, vinyl chloride-based resins, vinyl acetate copolymer resins, and mixtures of these resins. The print ink may contain known additives such as an antistatic agent, a light-blocking agent, an ultraviolet absorption, a plasticizer, a lubricant, a filler, a colorant, a stabilizer, a lubricating agent, a defoamer, a crosslinking agent, an anti-blocking agent, and an antioxidant.

A printing method for providing the print layer is not particularly limited, and a known printing method such as an offset printing method, a gravure printing method, or a screen printing method can be employed. For drying the solvent after printing, a known drying method such as a hot air drying method, a heat roll drying method, or an infrared drying method can be employed.

The biaxially oriented polyester film of the present invention can be provided with a gas barrier layer such as an inorganic thin film layer or a metal foil layer as long as the object of the present invention is not impaired by doing so.

In the case of using an inorganic thin film layer as the gas barrier layer, the inorganic thin film layer is a thin film made from a metal or an inorganic oxide. The material for forming the inorganic thin film layer is not particularly limited as long as the material can be made into a thin film. From the viewpoint of gas barrier properties, preferable examples of the material include aluminum and inorganic oxides such as a silicon oxide (silica), an aluminum oxide (alumina), and mixtures of the silicon oxide and the aluminum oxide. From the viewpoint of enabling achievement of both flexibility and denseness of the thin film layer, a composite oxide of the silicon oxide and the aluminum oxide is particularly preferable.

In the composite oxide, with the mixture ratio of the silicon oxide and the aluminum oxide being the mass ratio of the metal contents, the Al content is preferably in a range of not lower than 20% and not higher than 70%. When the Al content is not higher than 70%, the inorganic thin film layer can be softened. Consequently, at the time of secondary machining such as printing or lamination, the gas barrier properties can be prevented from decreasing as a result of fracture of the thin film. The silicon oxide mentioned herein refers to any type of silicon oxide such as SiO or $SiO_2$, or a mixture of these silicon oxides. The aluminum oxide mentioned herein refers to any type of aluminum oxide such as AlO or $Al_2O_3$, or a mixture of these aluminum oxides.

The film thickness of the inorganic thin film layer is ordinarily not smaller than 1 nm and not larger than 100 nm and is preferably not smaller than 5 nm and not larger than 50 nm. When the film thickness of the inorganic thin film layer is not smaller than 1 nm, it becomes easy to obtain more satisfactory gas barrier properties. Meanwhile, when the film thickness is not larger than 100 nm, an advantage is obtained in terms of bending resistance and manufacturing cost.

A method for forming the inorganic thin film layer is not particularly limited, and, for example, it is possible to employ, as appropriate, a known vapor deposition method such as: a physical vapor deposition method (PVD method) such as a vacuum deposition method, a sputtering method, or an ion plating method; or a chemical vapor deposition method (CVD method). Hereinafter, a typical method for forming the inorganic thin film layer will be described with a silicon oxide/aluminum oxide-based thin film being taken as an example. In the case of employing, for example, a vacuum deposition method, a mixture of $SiO_2$ and $Al_2O_3$, a mixture of $SiO_2$ and Al, or the like, is preferably used as a raw material to be vapor-deposited. Each of these raw materials to be vapor-deposited is ordinarily used in the form of particles. In this case, the size of each particle is desirably a size that does not lead to any change in pressure at the time of vapor deposition, and a preferable particle diameter is not smaller than 1 mm and not larger than 5 mm. For heating, it is possible to employ a method such as a resistive heating method, a high frequency induction heating method, an electron beam heating method, or a laser heating method. Alternatively, it is also possible to employ a reactive vapor deposition method in which oxygen gas, nitrogen gas, hydrogen gas, argon gas, carbon dioxide gas, water vapor, or the like is introduced as a reaction gas; or means such as ozone addition or ion assist is used. Further, film production conditions can also be arbitrarily changed so as to, for example: apply a bias to a body for vapor deposition (a laminated film to be used for vapor deposition); or heat or cool the body for vapor deposition. The vapor deposition materials, reaction gases, application of a bias to the body for vapor deposition, heating/cooling, and the like, can be changed in the same manner also in the case of employing a sputtering method or a CVD method. Further, the print layer may be laminated on the above inorganic thin film layer.

In the case where the biaxially oriented polyester film of the present invention is provided with the inorganic thin film layer, a protective layer is preferably provided on the inorganic thin film layer. The gas barrier layer made from a metal oxide is not a completely dense film, and minute defect portions are interspersed therein. If a particular protective layer resin composition described later is applied on the metal oxide layer so as to form a protective layer, a resin in the protective layer resin composition permeates the defect portions of the metal oxide layer. As a result, an effect of stabilizing the gas barrier properties is obtained. In addition, if a material having gas barrier properties is used also for the protective layer itself, the gas barrier performance of the laminated film is also significantly improved.

Examples of the protective layer include protective layers each obtained by adding a curing agent such as an epoxy-based curing agent, an isocyanate-based curing agent, or a melamine-based curing agent to a resin such as a urethane-based resin, a polyester-based resin, an acrylic-based resin, a titanium-based resin, an isocyanate-based resin, an imine-based resin, or a polybutadiene-based resin. Examples of a solvent used for forming the protective layer include: solvents based on aromatic compounds such as benzene and toluene; solvents based on alcohols such as methanol and ethanol; solvents based on ketones such as aceton and methyl ethyl ketone; solvents based on esters such as ethyl acetate and butyl acetate; polyhydric alcohol derivatives such as ethylene glycol monomethyl ether; and the like.

A layer made from another material may be laminated on the biaxially oriented polyester film of the present invention. As a method for the stacking, it is possible to employ: a method in which the layer is laminated after the biaxially oriented polyester film is produced; or a method in which the layer is laminated during film production.

The biaxially oriented polyester film of the present invention can be used as a packaging material by, for example, forming a heat-sealable resin layer called a sealant (also referred to as sealant layer) on the biaxially oriented polyester film. The sealant layer is ordinarily formed through an extrusion lamination method or a dry lamination method. A thermoplastic copolymer for forming the heat-sealable resin layer only has to be one that can sufficiently exhibit sealant adhesiveness, and it is possible to use a polyethylene resin such as HDPE, LDPE, or LLDPE; a polypropylene resin; an ethylene-vinyl acetate copolymer; an ethylene-$\alpha$-olefin random copolymer; an ionomer resin; or the like.

The sealant layer may be a single-layer film or a multilayer film and only has to be selected according to a required function. For example, from the viewpoint of imparting moisture resistance, it is possible to use a multilayer film in which a resin such as an ethylene-cyclic olefin copolymer or polymethylpentene is interposed. In addition, various additives such as a flame retardant, a slipping agent, an anti-blocking agent, an antioxidant, a light stabilizer, and a tackifier may be blended in the sealant layer.

The thickness of the sealant layer is preferably not smaller than 10 $\mu$m and not larger than 100 $\mu$m and more preferably not smaller than 20 $\mu$m and not larger than 60 $\mu$m.

A laminated body of the present invention is a laminate obtained by stacking a metal layer on the adhesive layer side of the biaxially oriented polyester film of the present invention. The metal layer may be laminated so as to be in direct contact with the biaxially oriented polyester film of the present invention or may be laminated on the biaxially oriented polyester film with another layer such as an adhesive layer interposed therebetween.

Examples of a metal of the metal layer include various metal elements (aluminum, iron, copper, nickel, and the like), and an aluminum layer is particularly preferable. Although the thickness of the metal layer is not particularly limited, the thickness is preferably not smaller than 15 $\mu$m and not larger than 80 $\mu$m and particularly preferably not smaller than 20 $\mu$m and not larger than 60 $\mu$m from the viewpoint of deep drawability.

The laminated body of the present invention obtained by stacking the metal layer on the adhesive layer side of the biaxially oriented polyester film of the present invention has a tensile elongation at break. A higher tensile elongation at break leads to a more favorable deep drawability, and thus is more preferable.

On the metal layer side of the laminated body of the present invention obtained by stacking the metal layer on the adhesive layer side of the biaxially oriented polyester film of the present invention, a sealant layer is further laminated to obtain a laminated body. The obtained laminated body has a tensile elongation at break. The lower limit thereof is preferably 30%, more preferably 32%, and particularly preferably 34%. Setting of the tensile elongation at break to be not lower than 30% enables the laminated body to be sufficiently elongated, whereby deep drawability becomes favorable.

The upper limit of the tensile elongation at break of the above laminated body is preferably 50%, more preferably 48%, and particularly preferably 46%. Setting of the tensile elongation at break to be not higher than 50% enables the dynamic strength of the laminated body to be high, whereby troubles such as formation of a pinhole at the time of deep drawing can be prevented.

EXAMPLES

Next, the present invention will be described in more detail by means of examples. However, the present invention is not limited to the following examples.

[Thickness of Film]

The thickness was measured by using a dial gauge in compliance with Method A of JIS K7130-1999.

[Reversible Heat Capacity Difference (ΔCp) at around Glass Transition Temperature]

A replacement blade for a razor was used as a blade to cut portions out of surfaces of the base layer and the adhesive layer of a biaxially oriented polyester film, and each of the cut portions was used as a measurement sample.
Using a temperature-modulated differential scanning calorimeter (DSC) "DSC250" (manufactured by TA Instruments), $5.0 \pm 0.2$ mg of the sample weighed out to be put into a hermetic aluminum pan was measured at an average temperature increase rate of 2.0°C/min and at a modulation cycle of 40 seconds in the MDSC (registered trademark) Heat-Only mode to obtain a reversible heat capacity curve. An inflection point in the obtained heat capacity curve was obtained by using attached analysis software (TA Analysis manufactured by TA Instruments), and, as the difference between heat capacities before and after the inflection point (glass transition temperature: abbreviated as Tg), a reversible heat capacity difference was obtained according to the following equation. Here, the above inflection point refers to a point at which the value of differentiating two times is zero in a case where the reversible heat capacity curve is an ideal curve with no concave or convex.

$$\text{Reversible heat capacity difference (ΔCp)} = \text{(high-temperature-side heat capacity)} - \text{(low-temperature-side heat capacity)}$$

A measurement example for the reversible heat capacity difference is shown in FIG. 1. An extension line of a baseline of the heat capacity curve is drawn on the high-temperature side relative to Tg in the heat capacity curve. A line obtained by performing, through the least-squares method, linear fitting of the baseline of the heat capacity curve within a range from Tg+5°C to Tg+15°C is defined as an extension line 3 of the aforementioned baseline of the heat capacity curve on the high-temperature side relative to Tg. Then, an intersection point of the extension line 3 with a tangent line 2 at the inflection point (Tg) is obtained, and the value on the Y axis (reversible heat capacity) at the intersection point is read and used as a high-temperature-side heat capacity. Then, an extension line of a baseline of the heat capacity curve is drawn on the low-temperature side relative to Tg. Here, a line obtained by performing, through the least-squares method, linear fitting of the baseline of the heat capacity curve within a range from Tg-15°C to Tg-5°C is defined as an extension line 4 of the aforementioned baseline of the heat capacity curve on the low-temperature side relative to Tg. Then, an intersection point of the extension line 4 with the tangent line 2 at the inflection point 1 (Tg) is obtained, and the value on the Y axis (reversible heat capacity) at the intersection point is read and used as a low-temperature-side heat capacity. Thus, the difference between the values of the high-temperature-side heat capacity and the low-temperature-side heat capacity was defined as a heat capacity difference ΔCp.
It was confirmed that the measurement was able to be normally performed without any disarray in baseline shift of the above reversible heat capacity measurement.

[Molecular Orientation Ratio of Film]

By using an MOA-6004 type molecular orientation meter manufactured by Oji Scientific Instruments, a molecular orientation ratio (the ratio of a maximum value to a minimum value of a transmitted microwave intensity measured by using the molecular orientation meter) (maximum value/minimum value) of a sample cut out from a center portion of each biaxially oriented polyester film was obtained. In each of examples and comparative examples, the molecular orientation ratio (maximum value/minimum value) was a molecular orientation ratio (a value in the TD direction/a value in the MD direction).

[Stress at 10% Elongation (F10) of Film]

Samples each having a width of 15 mm and a length of 180 mm were cut out from each biaxially oriented polyester film. Each of the samples having been cut out was aged for 12 hours in an atmosphere of 23°C and 65%RH, and then measurement was performed in an atmosphere of 23°C and 65%RH and under a condition of a chuck spacing of 100 mm and a tension speed of 360 mm/min. The measurement was repeated five times, and the average value of stresses at which the film was elongated by 10% (stresses at 10% elongation) was used. As a measurement device, AUTOGRAPH AG-1 manufactured by Shimadzu Corporation was used.

[Haze of Film]

Each biaxially oriented polyester film was cut into a square shape with each side thereof measuring 10 cm, and haze measurement was performed by using a haze meter NDH2000 manufactured by NIPPON DENSHOKU INDUSTRIES Co., Ltd., in compliance with JIS K7361-1. The haze measurement was performed at three locations, and the average value of the measurement results at the three locations was regarded as an actually measured haze value.

[Dynamic Friction Coefficient of Film]

A dynamic friction coefficient at the time of joining the front surface and the back surface of each biaxially oriented polyester film was obtained in an environment of 23°C and 65%RH by using a tensile tester (TENSILON RTG-1210 manufactured by A&D Company, Limited) in compliance with JIS K-7125. The weight of a sled (weight), on an upper side, around which the film was wound was 1.5 kg, and the magnitude of the base area of the sled was 39.7 mm$^2$. The tension speed at the time of friction coefficient measurement was 200 mm/min.

[Heat Shrinkage Rate of Biaxially Oriented Polyester Film]

Measurement of a heat shrinkage rate was performed according to a dimensional change test method that complies with JIS-C-2318 except that: the test temperature was set to 150°C; and the heating time was set to 15 minutes.

[Manufacturing of Laminated body]

On the adhesive layer side of each biaxially oriented polyester film of the present invention, urethane-based two-component curing type adhesives "TAKELAC (registered trademark) A525S" and "TAKENATE (registered trademark) A50" (both of which were manufactured by Mitsui Chemicals, Inc.) were blended in a ratio of 13.5:1.0 (mass ratio), and an aluminum layer ("Aluminum Foil CE 8079" manufactured by TOYO ALUMINIUM K.K.) having a thickness of 40 μm was laminated through a dry lamination method. Subsequently, on the aluminum layer side of the above layered body, in the same manner, the urethane-based two-component curing type adhesives were laminated, and an unstretched polypropylene film ("P1147" manufactured by Toyobo Co., Ltd.) having a thickness of 70 μm was laminated through a dry lamination method. This layered body was aged for four days at 40°C to obtain a laminate. Lamination of the film and the aluminum layer was performed in such directions that: the machine directions thereof were aligned; and the transverse directions thereof were aligned. Adhesive layers formed from the urethane-based two-component curing type adhesives had a thickness of 4 μm after being dried.

[Tensile Elongation at Break of Laminated body]

Samples each having a width of 15 mm and a length of 180 mm were cut out from the aforementioned laminated body. Each of the samples having been cut out was aged for 12 hours in an atmosphere of 23°C and 65%RH, and then measurement was performed in an atmosphere of 23°C and 65%RH and under a condition of a chuck spacing of 100 mm and a tension speed of 360 mm/min. The measurement was repeated five times, and the average value of elongations at which the aluminum layer was broken was regarded as the tensile elongation at break of the laminated body. As a measurement device, AUTOGRAPH AG-1 manufactured by Shimadzu Corporation was used.

[Evaluation of Deep Drawability of Laminated body]

A sample measuring 10 cm in the machine direction and 10 cm in the transverse direction was cut out from the aforementioned laminated body. The sample was set on a mold shown in FIG. 4 and FIG. 5 and was pressed from above to perform drawing. Specifically, the laminated body was placed on the mold having a width (W) of 54 mm, a depth (D) of 54 mm, a height (H) of 12 mm, a roundness of 3 mm, and a recessed shape, and pressed with a punch having a shape corresponding to the shape of the mold in a state where the laminated body was restrained by a film restrainer. The drawing speed was set to 6 mm/s.

Drawing was performed so as to satisfy N = 10 with respect to each drawing depth, and a maximum drawing depth obtained when neither a film rupture nor a pinhole was generated at N = 10, was regarded as a deep drawing value of the sample.

[Example 1]

A two-layer configuration including a base layer as a layer A and an adhesive layer as a layer B was obtained. A PET resin (composed of terephthalic acid//ethylene glycol=100//100 (% by mole), having an intrinsic viscosity of 0.62 dl/g, and having silica particles blended therein) and a PBT resin (composed of terephthalic acid//butanediol=100//100 (% by mole) and having an intrinsic viscosity of 1.28 dl/g) were put into an extruder 1 for forming the base layer as the layer A. Next, the PET resin (composed of terephthalic acid//ethylene glycol=100//100 (% by mole), having an intrinsic viscosity of 0.62 dl/g, and having silica particles blended therein) and a PET resin obtained by copolymerization (composed of terephthalic acid//ethylene glycol/diethylene glycol=100//60/40 (% by mole) and having an intrinsic viscosity of 0.62 dl/g) were put into an extruder 2 for forming the adhesive layer as the layer B, in such a ratio that the diethylene glycol component content of the layer B became 17 % by mole. In the extruders, the respective resins were melted at 280°C, and then a convergence device caused the layer A and the layer B to converge. The resultant resin was cast from a T-die at 280°C and adhered to a cooling roll at 10°C through an electrostatic adhesion method. Consequently, an unstretched sheet having a two-layer configuration was obtained. In each of the layers, the silica particle content with respect to 100% by mass of the entire resin composition in the layer was set to 0.1% by mass as a silica concentration.

Then, the obtained unstretched sheet was subjected to 4.0 times stretching in the MD direction at a temperature of 115°C. Then, the sheet was caused to pass through a tenter with a linear pattern as a stretching pattern so as to be subjected to 4.1 times stretching in the TD direction at 110°C and was, at 190°C, subjected to heat setting treatment for 3 seconds and 5% relaxation treatment for 1 second. Consequently, a biaxially oriented polyester film having a thickness of 25 μm was obtained. The resin composition of, and the film production conditions for, the biaxially oriented polyester film are indicated in Table 1. In addition, physical properties and evaluation results of the obtained film are indicated in Table 1.

[Example 2]

Film production was performed in the same manner as in Example 1 except that the stretching pattern of the tenter was changed to a logarithmic pattern. Consequently, a biaxially oriented polyester film having a thickness of 25 μm was obtained. Physical properties and evaluation results of the obtained film are indicated in Table 1.

[Example 3]

Film production was performed in the same manner as in Example 1 except that the stretching pattern of the tenter was changed to a two-stage stretching pattern, with the temperature for stretching in the first stage being set to 110°C and with the temperature for stretching in the second stage being set to 115°C. Consequently, a biaxially oriented polyester film having a thickness of 25 μm was obtained. Physical properties and evaluation results of the obtained film are indicated in Table 1.

[Examples 4, 5]

Film production was performed in the same manner as in Example 1 except that the weight proportions of the raw materials put into the extruder 2 were changed such that the amount of the diethylene glycol component in the adhesive layer as the layer B took the value indicated in Table 1. Consequently, a biaxially oriented polyester film having a thickness of 25 μm was obtained. Physical properties and evaluation results of the obtained film are indicated in Table 1.

[Example 6]

Film production was performed in the same manner as in Example 1 except that the thicknesses of the base layer as the layer A and the adhesive layer as the layer B were changed to the thicknesses indicated in Table 1. Consequently, a biaxially oriented polyester film having a thickness of 25 μm was obtained. Physical properties and evaluation results of the obtained film are indicated in Table 1.

## [Table 1]

| | | | | | | Examples | | | | | |
|---|---|---|---|---|---|---|---|---|---|---|---|
| | | | | | | 1 | 2 | 3 | 4 | 5 | 6 |
| Resin composition | Base layer (Layer A) | Composition ratio | PET | % by mass | | 80 | 80 | 80 | 80 | 80 | 80 |
| | | | PBT | | | 20 | 20 | 20 | 20 | 20 | 20 |
| | | Thickness | | μm | | 23 | 23 | 23 | 23 | 23 | 15 |
| | Adhesive layer (Layer B) | Copolymerization component ratio | DEG | % by mole | | 17 | 17 | 17 | 5 | 25 | 17 |
| | | | NPG | | | - | - | - | - | - | - |
| | | Thickness | | μm | | 2 | 2 | 2 | 2 | 2 | 10 |
| | Total film thickness | | | μm | | 25 | 25 | 25 | 25 | 25 | 25 |
| Stretch condition | MD stretch ratio | | | times | | 4.0 | 4.0 | 4.0 | 4.0 | 4.0 | 4.0 |
| | First-stage TD stretch ratio | | | times | | 4.1 | 4.1 | 2.1 | 4.1 | 4.1 | 4.1 |
| | Second-stage TD stretch ratio | | | times | | - | - | 2.0 | - | - | - |
| | Ratio between stretch ratios (TD/MD) | | | - | | 1.03 | 1.03 | 1.03 | 1.03 | 1.03 | 1.03 |
| | TD stretch pattern | | | - | | Linear pattern | Logarithmic pattern | 2-stage | Linear pattern | Linear pattern | Linear pattern |
| Heat-setting temperature | | | | °C | | 190 | 190 | 190 | 190 | 190 | 190 |
| ΔCp at around glass transition temperature | | | Base layer | J/g·°C | | 0 | 0 | 0 | 0 | 0 | 0 |
| | | | Adhesive layer | | | 0.294 | 0.310 | 0.308 | 0.132 | 0.428 | 0.307 |
| | | | Difference between layers | | | 0.294 | 0.310 | 0.308 | 0.132 | 0.428 | 0.307 |
| Molecular orientation ratio | | | | - | | 1.15 | 1.01 | 1.02 | 1.17 | 1.12 | 1.08 |
| Stresses at 10% elongation (F10) | | | MD | MPa | | 105 | 106 | 104 | 115 | 93 | 90 |
| | | | TD | | | 115 | 110 | 108 | 130 | 100 | 93 |
| Haze | | | | % | | 3.5 | 3.3 | 3.2 | 3.0 | 3.8 | 3.9 |
| Dynamic friction coefficient | | | | - | | 0.42 | 0.40 | 0.39 | 0.39 | 0.45 | 0.47 |
| Heat shrinkage rates | | | MD | % | | 4.0 | 3.9 | 4.0 | 3.5 | 4.7 | 5.5 |
| | | | TD | | | 2.5 | 2.3 | 2.2 | 2.2 | 3.1 | 4.1 |
| Tensile elongations at break of laminated body | | | MD | % | | 37 | 38 | 36 | 37 | 35 | 31 |
| | | | TD | | | 40 | 38 | 37 | 42 | 39 | 33 |
| Deep drawability | | | | mm | | 4.2 | 4.1 | 4.2 | 4.3 | 4.1 | 3.6 |

[Example 7]

Film production was performed in the same manner as in Example 1 except that the PET resin (composed of terephthalic acid//ethylene glycol=100//100 (% by mole), having an intrinsic viscosity of 0.62 dl/g, and having silica particles blended therein) and a PET resin obtained by copolymerization (composed of terephthalic acid//ethylene glycol/neopentyl glycol=100//60/40 (% by mole) and having an intrinsic viscosity of 0.62 dl/g) were used as resins to be put into the extruder 2 for forming the adhesive layer as the layer B. Consequently, a biaxially oriented polyester film having a thickness of 25 μm was obtained. Physical properties and evaluation results of the obtained film are indicated in Table 2.

[Examples 8, 9]

Film production was performed in the same manner as in Example 1 except that the film production conditions were changed to those indicated in Table 2. Consequently, a biaxially oriented polyester film having a thickness of 25 μm was obtained. Physical properties and evaluation results of the obtained film are indicated in Table 2.

[Examples 10, 11]

Film production was performed in the same manner as in Example 1 except that the proportions in the resin composition in the base layer as the layer A were changed to those indicated in Table 1. Consequently, a biaxially oriented polyester film having a thickness of 25 μm was obtained. Physical properties and evaluation results of the obtained film are indicated in Table 2.

## [Table 2]

| | | | | | | Examples | | | | |
|---|---|---|---|---|---|---|---|---|---|---|
| | | | | | | 7 | 8 | 9 | 10 | 11 |
| Resin composition | Base layer (Layer A) | Composition ratio | PET | % by mass | | 80 | 80 | 80 | 60 | 100 |
| | | | PBT | | | 20 | 20 | 20 | 40 | 0 |
| | | Thickness | | μm | | 23 | 23 | 23 | 23 | 23 |
| | Adhesive layer (Layer B) | Copolymerization component ratio | DEG | % by mole | | - | 17 | 17 | 17 | 17 |
| | | | NPG | | | 17 | - | - | - | - |
| | | Thickness | | μm | | 2 | 2 | 2 | 2 | 2 |
| | Total film thickness | | | μm | | 25 | 25 | 25 | 25 | 25 |
| Stretch condition | MD stretch ratio | | | times | | 4.0 | 4.4 | 4.0 | 4.0 | 4.0 |
| | First-stage TD stretch ratio | | | times | | 4.1 | 4.6 | 4.1 | 4.1 | 4.1 |
| | Second-stage TD stretch ratio | | | times | | - | - | - | - | - |
| | Ratio between stretch ratios (TD/MD) | | | - | | 1.03 | 1.05 | 1.03 | 1.03 | 1.03 |
| | TD stretch pattern | | | - | | Linear pattern | Linear pattern | Linear pattern | Linear pattern | Linear pattern |
| Heat-setting temperature | | | | °C | | 190 | 190 | 210 | 190 | 190 |
| ΔCp at around glass transition temperature | | | Base layer | J/g·°C | | 0 | 0 | 0 | 0 | 0 |
| | | | Adhesive layer | | | 0.305 | 0.288 | 0.254 | 0.299 | 0.297 |
| | | | Difference between layers | | | 0.305 | 0.288 | 0.254 | 0.299 | 0.297 |
| Molecular orientation ratio | | | | - | | 1.14 | 1.19 | 1.10 | 1.13 | 1.19 |
| Stresses at 10% elongation (F10) | | | MD | MPa | | 110 | 140 | 92 | 94 | 120 |
| | | | TD | | | 112 | 152 | 101 | 105 | 131 |
| Haze | | | | % | | 3.1 | 2.9 | 3.3 | 3.8 | 2.9 |
| Dynamic friction coefficient | | | | - | | 0.40 | 0.39 | 0.45 | 0.44 | 0.38 |
| Heat shrinkage rates | | | MD | % | | 3.9 | 5.8 | 2.2 | 4.5 | 3.8 |
| | | | TD | | | 2.7 | 4.1 | 1.3 | 3.1 | 2.1 |
| Tensile elongations at break of laminated body | | | MD | % | | 38 | 45 | 30 | 33 | 37 |
| | | | TD | | | 41 | 44 | 33 | 37 | 39 |
| Deep drawability | | | | mm | | 4.2 | 5.0 | 4.2 | 4.3 | 4.2 |

[Comparative Example 1]

Film production was performed in the same manner as in Example 1 except that the weight proportions of the raw materials put into the extruder 2 were changed such that the amount of the diethylene glycol component in the adhesive layer as the layer B took the value indicated in Table 3. Consequently, a biaxially oriented polyester film having a thickness of 25 $\mu$m was obtained. In the obtained film, the difference between the reversible heat capacity differences ($\Delta$Cp) at around the glass transition temperatures of the adhesive layer and the base layer was small and the adhesiveness was insufficient, and thus the corresponding laminated body had low tensile elongations at break. Therefore, the laminated body had an insufficient deep drawability.

[Comparative Example 2]

Film production was performed in the same manner as in Example 1 except that the weight proportions of the raw materials put into the extruder 2 were changed such that the amount of the diethylene glycol component in the adhesive layer as the layer B took the value indicated in Table 3. Consequently, a biaxially oriented polyester film having a thickness of 25 $\mu$m was obtained. The obtained film had low stresses at 10% elongation (F10), and the corresponding laminated body had low tensile elongations at break. Therefore, the laminated body had an insufficient deep drawability.

[Comparative Example 3]

Film production was performed in the same manner as in Example 1 except that a single-layer configuration composed only of the base layer as the layer A was employed. Consequently, a biaxially oriented polyester film having a thickness of 25 $\mu$m was obtained. Since the obtained film had no adhesive layer, no difference between reversible heat capacity differences ($\Delta$Cp) at around the glass transition temperatures of an adhesive layer and the base layer was obtained, either. Consequently, the film had an insufficient adhesiveness, and thus the corresponding laminated body had low tensile elongations at break. Therefore, the laminated body had an insufficient deep drawability.

[Comparative Example 4]

Film production was performed in the same manner as in Example 1 except that the thicknesses of the base layer as the layer A and the adhesive layer as the layer B were changed to those indicated in Table 3. Consequently, a biaxially oriented polyester film having a thickness of 25 $\mu$m was obtained. The obtained film had low stresses at 10% elongation (F10), and the corresponding laminated body had low tensile elongations at break. Therefore, the laminated body had an insufficient deep drawability.

[Comparative Example 5]

Film production was performed in the same manner as in Example 1 except that the film production conditions were changed to those indicated in Table 3. Consequently, a biaxially oriented polyester film having a thickness of 25 $\mu$m was obtained. The obtained film had a high orientation ratio, and thus the deep drawability was insufficient.

[Comparative Example 6]

Film production was performed in the same manner as in Example 1 except that the film production conditions were changed to those indicated in Table 1. Consequently, a biaxially oriented polyester film having a thickness of 25 $\mu$m was obtained. The obtained film had a low stress at 10% elongation (F10), and the corresponding laminated body had low tensile elongations at break. Therefore, the laminated body had an insufficient deep drawability.

[Comparative Example 7]

Film production was performed in the same manner as in Example 1 except that the proportions in the resin composition in the base layer as the layer A were changed to those indicated in Table 1. Consequently, a biaxially oriented polyester film having a thickness of 25 $\mu$m was obtained. The obtained film had low stresses at 10% elongation (F10), and the corresponding laminated body had low tensile elongations at break. Therefore, the laminated body had an insufficient deep drawability.

[Table 3]

| | | | | | Comparative examples | | | | | | |
|---|---|---|---|---|---|---|---|---|---|---|---|
| | | | | | 1 | 2 | 3 | 4 | 5 | 6 | 7 |
| Resin composition | Base layer (Layer A) | Composition ratio | PET | % by mass | 80 | 80 | 80 | 80 | 80 | 80 | 40 |
| | | | PBT | | 20 | 20 | 20 | 20 | 20 | 20 | 60 |
| | | Thickness | | μm | 23 | 23 | 25 | 10 | 23 | 23 | 23 |
| | Adhesive layer (Layer B) | Copolymerization component ratio | DEG | % by mole | 3 | 30 | - | 17 | 17 | 17 | 17 |
| | | | NPG | | - | - | - | - | - | - | - |
| | | | | μm | 2 | 2 | - | 15 | 2 | 2 | 2 |
| | Total film thickness | | | μm | 25 | 25 | 25 | 25 | 25 | 25 | 25 |
| Stretch condition | MD stretch ratio | | | times | 4.0 | 4.0 | 4.0 | 4.0 | 4.0 | 4.0 | 4.0 |
| | First-stage TD stretch ratio | | | times | 4.1 | 4.1 | 4.1 | 4.1 | 4.6 | 4.1 | 4.1 |
| | Second-stage TD stretch ratio | | | times | - | - | - | - | - | - | - |
| | Ratio between stretch ratios (TD/MD) | | | - | 1.03 | 1.03 | 1.03 | 1.03 | 1.15 | 1.03 | 1.03 |
| | TD stretch pattern | | | - | Linear pattern | Linear pattern | Linear pattern | Linear pattern | Linear pattern | Linear pattern | Linear pattern |
| Heat-setting temperature | | | | °C | 190 | 190 | 190 | 190 | 190 | 220 | 190 |
| ΔCp at around glass transition temperature | | | Base layer | J/g·°C | 0 | 0 | 0 | 0 | 0 | 0 | 0 |
| | | | Adhesive layer | | 0.096 | 0.582 | 0 | 0.312 | 0.245 | 0.217 | 0.298 |
| | | | Difference between layers | | 0.096 | 0.582 | 0 | 0.312 | 0.245 | 0.217 | 0.298 |
| Molecular orientation ratio | | | | - | 1.18 | 1.08 | 1.19 | 1.07 | 1.25 | 1.08 | 1.13 |
| Stresses at 10% elongation (F10) | | | MD | MPa | 123 | 83 | 120 | 78 | 107 | 86 | 87 |
| | | | TD | | 139 | 89 | 136 | 81 | 130 | 93 | 93 |
| Haze | | | | % | 2.7 | 3.9 | 3.0 | 4.3 | 3.5 | 3.1 | 3.8 |
| Dynamic friction coefficient | | | | - | 0.37 | 0.51 | 0.36 | 0.51 | 0.41 | 0.48 | 0.45 |
| Heat shrinkage rates | | | MD | % | 3.1 | 5.1 | 3.2 | 5.9 | 4.2 | 1.5 | 4.3 |
| | | | TD | | 1.9 | 3.5 | 1.9 | 5.3 | 3.9 | 1.0 | 2.8 |
| Tensile elongations at break of laminated body | | | MD | % | 28 | 27 | 25 | 25 | 40 | 28 | 27 |
| | | | TD | | 30 | 29 | 25 | 28 | 41 | 31 | 37 |
| Deep drawability | | | | mm | 3.3 | 3.1 | 3.0 | 3.0 | 2.9 | 3.4 | 3.3 |

## DESCRIPTION OF THE REFERENCE CHARACTERS

1    inflection point (Tg)
2    tangent line at inflection point (Tg)
3    extension line of baseline of heat capacity curve on high-temperature side
4    extension line of baseline of heat capacity curve on low-temperature side
5    reversible heat capacity difference (ΔCp) at around glass transition temperature
6    punch
7    film restrainer
8    film laminated body
9    mold

## Claims

1. A biaxially oriented polyester film comprising at least a base layer and an adhesive layer each of which contains a polyester as a main component, wherein
the biaxially oriented polyester film satisfies the following requirements (1) to (3):

(1) a difference between reversible heat capacity differences ($\Delta$Cp) at around glass transition temperatures of the adhesive layer and the base layer is not smaller than 0.10 and not larger than 0.45;

(2) the biaxially oriented polyester film has a molecular orientation ratio measured by using a molecular orientation meter, the molecular orientation ratio being not lower than 1.0 and not higher than 1.2; and

(3) the biaxially oriented polyester film has a stress at 10% elongation (F10) in each of a machine direction and a transverse direction, the stress at 10% elongation (F10) being not lower than 90 MPa and not higher than 160 MPa.

2. The biaxially oriented polyester film according to claim 1, wherein the base layer contains polyethylene terephthalate in an amount of not lower than 60% by mass with respect to 100% by mass of a resin composition forming the base layer.

3. The biaxially oriented polyester film according to claim 2, wherein the base layer contains polyethylene terephthalate in an amount of not lower than 60% by mass and not higher than 90% by mass with respect to 100% by mass of the resin composition forming the base layer and contains polybutylene terephthalate in an amount of not lower than 10% by mass and not higher than 40% by mass with respect to 100% by mass of the resin composition forming the base layer.

4. The biaxially oriented polyester film according to any one of claims 1 to 3, wherein

the adhesive layer contains a polyethylene terephthalate resin obtained by copolymerization,
an ethylene terephthalate unit content with respect to the polyester contained in the adhesive layer is not lower than 75% by mole and not higher than 95% by mole, and
a copolymerization component content with respect to the polyester contained in the adhesive layer is not lower than 5% by mole and not higher than 25% by mole.

5. A laminated body, comprising the biaxially oriented polyester film according to any one of claims 1 to 4 and a metal layer laminated on the adhesive layer side of the biaxially oriented polyester film.

6. The laminated body according to claim 5, wherein the metal layer is an aluminum layer having a thickness of not smaller than 15 $\mu$m and not larger than 80 $\mu$m.

7. A packaging material in which the laminated body according to claim 6 is used.

[FIG. 1]

[FIG. 2]

[FIG. 3]

| Pre-heating zone | Stretching zone 1 | Stretching zone 1 | Heat-setting zone |

[FIG. 4]

R 3mm

54mm

54mm

A

A'

6    7

[FIG. 5]

6

7

8

9

## INTERNATIONAL SEARCH REPORT

| International application No. |
| --- |
| **PCT/JP2021/036622** |

### A. CLASSIFICATION OF SUBJECT MATTER

*B32B 27/36*(2006.01)i; *B32B 15/09*(2006.01)i; *B65D 65/40*(2006.01)i; *C08L 67/02*(2006.01)i
FI:   B32B27/36; B32B15/09 A; B65D65/40 D; C08L67/02

According to International Patent Classification (IPC) or to both national classification and IPC

### B. FIELDS SEARCHED

Minimum documentation searched (classification system followed by classification symbols)

B32B27/36; B32B15/09; B65D65/40; C08L67/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2018/150997 A1 (TOYOBO CO., LTD.) 23 August 2018 (2018-08-23)<br>entire text | 1-7 |
| A | JP 3-169549 A (TOYOBO CO., LTD.) 23 July 1991 (1991-07-23)<br>entire text | 1-7 |
| A | WO 2018/021211 A1 (TOYOBO CO., LTD.) 01 February 2018 (2018-02-01)<br>entire text | 1-7 |
| A | WO 2017/159582 A1 (TOYOBO CO., LTD.) 21 September 2017 (2017-09-21)<br>entire text | 1-7 |
| A | WO 2014/175313 A1 (TOYOBO CO., LTD.) 30 October 2014 (2014-10-30)<br>entire text | 1-7 |
| A | JP 3-176146 A (TOYOBO CO., LTD.) 31 July 1991 (1991-07-31)<br>entire text | 1-7 |
| A | JP 2016-159428 A (DAIWA CAN CO., LTD.) 05 September 2016 (2016-09-05)<br>entire text | 1-7 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 October 2021** | **26 October 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2021/036622** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 6-278246 A (KAWASAKI STEEL CORP.) 04 October 1994 (1994-10-04)<br>entire text | 1-7 |
| A | JP 2017-7726 A (KOBAYASHI KK) 12 January 2017 (2017-01-12)<br>entire text | 1-7 |

Form PCT/ISA/210 (second sheet) (January 2015)

**Information on patent family members**

International application No.

**PCT/JP2021/036622**

| Patent document cited in search report | | | Publication date (day/month/year) | Patent family member(s) | | | Publication date (day/month/year) |
|---|---|---|---|---|---|---|---|
| WO | 2018/150997 | A1 | 23 August 2018 | US | 2021/0101379 | A1 | |
| | | | | EP | 3587107 | A1 | |
| | | | | CN | 110337365 | A | |
| | | | | TW | 201834864 | A | |
| JP | 3-169549 | A | 23 July 1991 | US | 5458965 | A | |
| | | | | EP | 712719 | A1 | |
| | | | | KR | 10-1990-0011576 | A | |
| WO | 2018/021211 | A1 | 01 February 2018 | US | 2020/0023626 | A1 | |
| | | | | KR | 10-2019-0038802 | A | |
| | | | | MX | 2019000994 | A | |
| | | | | TW | 201815879 | A | |
| WO | 2017/159582 | A1 | 21 September 2017 | EP | 3431531 | A1 | |
| | | | | CN | 108779273 | A | |
| | | | | KR | 10-2018-0124882 | A | |
| | | | | TW | 201802155 | A | |
| WO | 2014/175313 | A1 | 30 October 2014 | US | 2016/0108171 | A1 | |
| | | | | EP | 2990455 | A1 | |
| | | | | CN | 105189687 | A | |
| | | | | KR | 10-2016-0002852 | A | |
| | | | | TW | 201446830 | A | |
| JP | 3-176146 | A | 31 July 1991 | US | 5458965 | A | |
| | | | | EP | 712719 | A1 | |
| | | | | KR | 10-1990-0011576 | A | |
| JP | 2016-159428 | A | 05 September 2016 | WO | 2016/136962 | A1 | |
| JP | 6-278246 | A | 04 October 1994 | (Family: none) | | | |
| JP | 2017-7726 | A | 12 January 2017 | (Family: none) | | | |

Form PCT/ISA/210 (patent family annex) (January 2015)

**EP 4 227 090 A1**

**Patent documents cited in the description**

- JP 6177475 B

- JP 5891792 B